Europäisches Patentamt

European Patent Office

Office européen des brevets

(19)

(11) Publication number: **0 120 556**

**A1**

(12) **EUROPEAN PATENT APPLICATION**

(21) Application number: **84300296.5**

(22) Date of filing: **18.01.84**

(51) Int. Cl.³: **F 16 K 5/06**

(30) Priority: **01.03.83 GB 8305603**

(43) Date of publication of application:
**03.10.84 Bulletin 84/40**

(84) Designated Contracting States:
**DE FR GB IT**

(71) Applicant: **MARWIN CONTROLS LIMITED**
**Main Street**
**Markfield Leicestershire(GB)**

(72) Inventor: **Steele, Michael John**
**The Highlands Roman Lane Little Aston Park**
**Sutton Coldfield West Midlands(GB)**

(74) Representative: **SERJEANTS**
**25, The Crescent King Street**
**Leicester, LE1 6RX(GB)**

(54) Fluid-pressure control valves.

(57) A valve seat ring (10) engages a valve closure ball (12). A recess (14) in the face of the ring (10) contains an O-ring 16. An annular slot (18) adjacent the recess (14) has a circlip (20) snapped therein to retain the O-ring (16).

An annular spacer (66) of heat-destructible material, has an L-sectional anvil forced towards it by a number of coil springs (70). Thus in the event of fire, the anvil, seat ring (10) and ball (12) are forced together to provide metal-to-metal sealing contact.

FIG.1

EP 0 120 556 A1

- 1 -

TITLE

"FLUID-PRESSURE CONTROL VALVES"

DESCRIPTION

Field of Invention

The invention relates to valves for the control of fluid pressure. Such valves are particularly but not exclusively suitable for oil and natural gas transmission pipe lines from drilling platform to shore, and for distribution. Generally speaking they have an internal diameter of from six to twelve inches (about 150 to 300 millimetres).

Background Art

Such a valve is described in Patent Specifications US 4 292 989 and EP 27 048. One of the problems with valves of this nature is to mount the valve closure ball with sufficient accuracy to ensure a tight seal under the high operating pressures encountered. Metal-to-metal contact between the ball and its seat is required, and this makes the valve difficult to assemble and lubricate.

## The invention

A valve according to the invention comprises a seat ring for engaging a valve closure ball, a recess for an O-ring in a face of the seat for engaging the ball, an annular slot in the face adjacent the recess, and a circlip which can be snapped into the slot to retain the O-ring in the recess. On mounting the ball in the valve, the circlip is forced by the ball fully into the slot, and the O-ring is forced into its recess, so that there is metal-to-metal contact between the ball and its seat.

The O-ring recess is preferably of about the same diameter as the inner part of the seat so that the full pressure applied when assembling the valve to a pipe end forces the O-ring and circlip onto the surface of the ball. The recess and slot are easily machined into the seat, the O-ring and circlip are readily inserted, and then the valve can easily be assembled.

The valve ball and seat ring are generally machined from alloy steel, heat treated and electroless nickel plated to harden them uniformly all over.    The O-rings are usually of rubber of Shore hardness of 90 to 92°.

Drawings

Figure 1 is a longitudinal section  through a valve according to the invention; and

Figure 2 is a scrap view of a part  thereof on a larger scale.

Best Mode

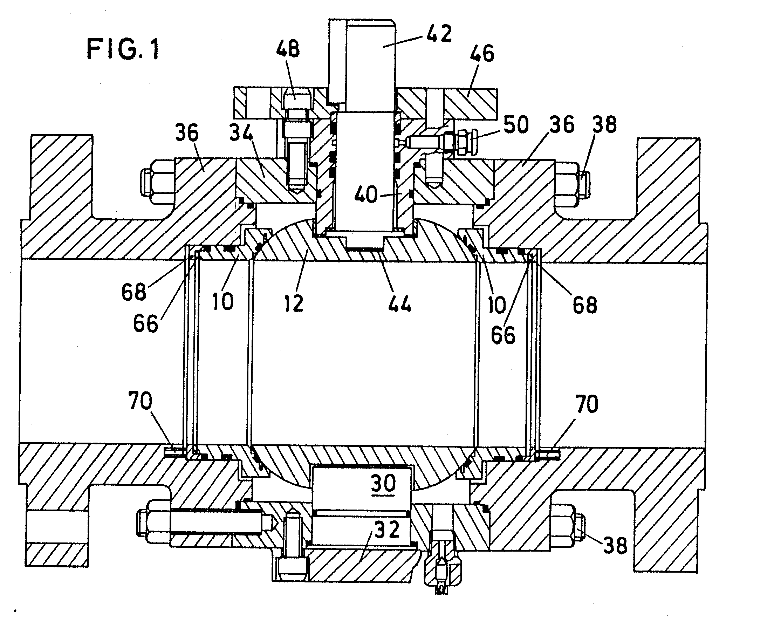

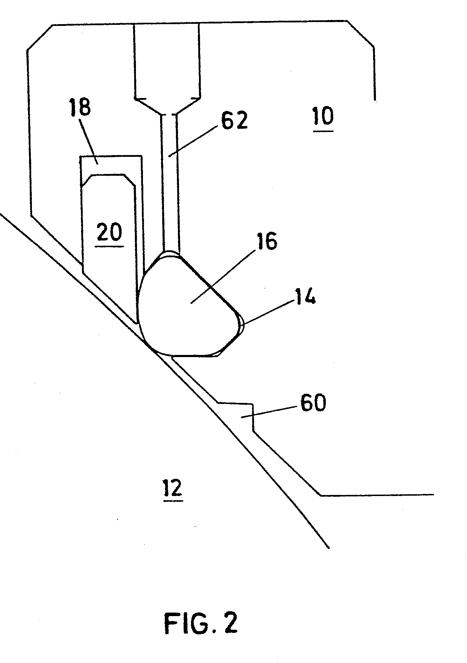

With particular reference to Figure 1 the valve comprises seat rings 10 engaging a  valve closure ball 12.  As can more clearly be seen in Figure 2, a face of the seat 10 engaging  the ball 12 has a recess 14 machined therein for an O-ring 16. Adjacent the recess 14 an annular slot 18 is machined in the face and has a circlip 20 snapped  therein and retaining the O-ring.

The ball 12 is mounted on a lower trunnion 30 held in position by a band 32 bolted to a valve casing 34.  The valve casing 34 is itself secured to pipe end flanges 36 by bolts 38.   The ball 12 is also mounted in an upper trunnion 40, and operable through a valve stem 42 engaging in a 'T' slot 44 in the ball 12.   The valve stem 42 and upper trunnion 40 are secured in position by a top cover 46 bolted to the valve casing 34 by cap head screws 48. To the right of the upper trunnion 40 there is shown a grease injector 50. Numerous O-ring seals are shown between the valve stem 42, the upper and lower trunnions 40, 30 the valve casing 34 and the seat ring 10 in a manner known in itself. These are paired, the inner seal being of rubber because it forms a better seal, and the outer seal of graphite because of its high-temperature sealing properties.

Adjacent the O-ring recess 14 in each seat ring 10, on the opposite side from the slot 18, is a grease recess 60 (Figure 2). A pressure vent hole 62 passes through the seat ring 10 to the O-ring recess 14. The seat ring 10 has a cylindrical extension into the pipe bore which engages through O-ring seals with a cylindrical surface on the inside of the pipe end. At the end of the seat ring 10, an annular spacer 66 of heat destructible material separates the ring 10 from an L-sectioned anvil in the pipe end. The anvil 68 is forced towards the seat ring 10 by a number of coil springs 70. This provides a fire seal. On a rise in temperature to perhaps 200°C depending upon the pressure the spacer 66 melts and the springs 70 force the anvil 68 against the ring 10 to lock it in position at a lower temperature than that at which the O-rings are carbonized.

CLAIMS

1.    A fluid-pressure control valve comprising a seat ring (10) for engaging a valve closure ball (12), and a recess (14) for an O-ring (16) in a face of the seat for engaging the ball, characterized by  an annular slot (18) in the face adjacent the recess (14), and a circlip (20) which can be snapped into the slot (18) to retain the O-ring (16) in the recess (14).

2.    A valve according to claim 1 characterized by a cylindrical extension on the seat ring  (10), an annular spacer (66) of heat-destructible material, an L-sectioned anvil, and a number of coil springs (70) for forcing the anvil towards the seat ring (10).

FIG.1

1/8

0120556

0120556

2/2

FIG. 2

0120556

## European Patent Office

# EUROPEAN SEARCH REPORT

Application number

| | DOCUMENTS CONSIDERED TO BE RELEVANT | | EP 84300296.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X,P | FR - A1 - 2 512 158 (NUOVO PIGNONE SPA) <br><br> * Page 3, line 30 - page 4, line 5; fig. 2,3 * <br><br>-- | 1 | F 16 K 5/06 |
| D,A | US - A - 4 292 989 (CAZZANIGA COMP.) <br><br> * Column 2, line 29 - column 3, line 16; fig. 2 * <br><br>-- | 1,2 | |
| D,A | EP - A1 - 0 027 048 (T.K. VALVE LTD) <br><br> * Page 4, line 25 - page 6, line 14; fig. 1-4 * <br><br>-- | 1,2 | |
| A | AT - B - 309 172 (HÜBNER-VAMAG VEREINIGTE ARMATURENFABRIKEN AG) <br><br> * Page 2, lines 27-56; fig. 2 * <br><br>-- | 1 | TECHNICAL FIELDS SEARCHED (Int. Cl. ³) <br><br> F 16 K 5/00 <br> F 16 K 13/00 |
| A | US - A - 3 177 887 (W.K. PRIESE) <br><br> * Totality * <br><br>---- | 1,2 | |

The present search report has been drawn up for all claims

| Place of search | Date of completion of the search | Examiner |
|---|---|---|
| VIENNA | 06-06-1984 | ROUSSARIAN |